# EUROPÄISCHE PATENTSCHRIFT

(11) **EP 2 438 836 B1**
(45) Veröffentlichungstag und Bekanntmachung des Hinweises auf die Patenterteilung: **07.08.2013**
(21) Anmeldenummer: 11183772.0
(22) Anmeldetag: 04.10.2011
(51) Int. Cl.: A47B 96/00, A47B 47/00, A47B 47/04, A47B 97/00

(54) **Anordnung mindestens einer Leichtbauplatte an einer mit einer Stromversorgung ausgestatteten Trägerplatte und Leichtbaumöbel**
Assembly of at least one lightweight construction board with a carrier plate comprising a power supply and lightweight furniture
Agencement constitué d'au moins un panneau de construction légère sur une plaque de support équipée d'une alimentation en courant et meuble en construction légère

(30) Priorität: 05.10.2010 DE 102010037997
(43) Veröffentlichungstag der Anmeldung: 11.04.2012
(73) Patentinhaber: Halemeier GmbH & Co. KG, 49326 Melle-Neuenkirchen (DE)
(72) Erfinder: Pabst, Thomas, 49326 Melle (DE); Lubahn, Sven, 32257 Bünde (DE); Halemeier, Eckhard, 32120 Hiddenhausen (DE); Meer, Tobias, 49080 Osnabrück (DE)
(74) Vertreter: Kleine, Hubertus

(56) Entgegenhaltungen:
- WO-A1-2008/108577
- WO-A1-2009/090068

## Beschreibung

Die vorllegende Erfindung betrifft eine Anordnung mindestens einer Leichtbauplatte an einer mit einer Stromversorgung ausgestatteten Trägerplatte gemäß dem Oberbegriff des Anspruchs 1.

Zur Befestigung einer Leichtbauplatte an einer Trägerplatte ist es aus dem Stand der Technik bekannt, diese über Trägerelemente, wie beispielsweise Dübel oder Schraubbolzen, an der Trägerplatte zu befestigen. Zur Aufnahme dieser Trägerelemente sind jeweils Verbindungsbeschläge vorgesehen, die einen sicheren Halt der Trägerelemente in der Leichtbauplatte gewährleisten.

Zur Elektrifizierung einer solchen Leichtbauplatte werden oftmals nach der Montage der Leichtbauplatte an der Trägerplatte bzw. eines aus Leichtbauplatten bestehenden Möbels Stromkabel auf der Oberfläche der Platten verlegt. Sollen die Kabel unauffällig im Inneren der Platte untergebracht werden, müssen in die Platten Schlitze eingefräst werden, in die die Kabel eingelegt werden, welche anschließend mit einer Deckplatte oder einer Deckschicht abgedeckt werden. Beim Übergang des Kabels von der Leichtbauplatte zur die Leichtbauplatte haltenden Trägerplatte müssen die jeweils in der Leichtbauplatte bzw. der Trägerplatte an- oder untergebrachten Kabelstücke ggfs. mit einem Stecker oder mit einer Kabelklemme miteinander verbunden werden.

Um bei der Montage des Möbels Quetschungen oder auf das Kabel wirkende Zugspannungen zu verhindern, werden die Stromkabel durch dicke Ummantelungen und/oder spezielle Befestigungen, beispielsweise in Form von Klemmschuhen mit Kabelschlaufen gesichert.

Soll eine solche Leichtbauplatte als Funktionsbauteil verwendet werden, beispielsweise durch Einbringen einer Ladestation für ein elektrisches Gerät wie beispielsweise ein Telefon oder ein Rasierapparat, wird ein entsprechender Adapter in die Leichtbauplatte eingearbeitet, der über eine Kabelverbindung, die entlang der oder durch die Leichtbauplatte und die Trägerplatte gelegt werden muss, um den Adapter mit elektrischer Energie zu versorgen.

Aufgabe der vorliegenden Erfindung ist es, eine Anordnung mindestens einer Leichtbauplatte an einer mit einer Stromversorgung ausgestatteten Trägerplatte bereit zu stellen, die eine einfache und sichere Stromversorgung eines in der Leichtbauplatte integrierten Funktionsmoduls ermöglicht und mit der eine Verwendung unterschiedlichster Funktionselemente ermöglicht ist.

Diese Aufgabe wird durch eine Anordnung mindestens einer Leichtbauplatte an einer mit einer Stromversorgung ausgestatteten Trägerplatte mit den Merkmalen des Anspruchs 1 gelöst.

Erfindungsgemäß weist die Leichtbauplatte einen Einbaurahmen mit darin angeordneten Kontaktelementen auf, wobei in dem Einbaurahmen ein mit räumlich entsprechend angeordneten Kontaktelementen bestücktes Funktionselement mit in den Einbaurahmen passenden Gehäuse austauschbar einsetzbar ist, wobei die Stromversorgung der Kontaktelemente des Einbaurahmens über die Trägerelemente erfolgt.

Die efindungsgemäße Anordnung hat den großen Vorteil, dass die jeweiligen Funktionselemente nicht direkt in die Leichtbauplatte eingelassen sind, sondern in einen Einbaurahmen, der in der Leichtbauplatte eingelassen ist, einsetzbar sind. Dadurch wird ermöglicht, dass der Einbaurahmen als universell nutzbarer Rahmen das Einsetzen verschiedenster elektrischer Funktionselemente gestattet Wird ein solches Leichtbaumöbel beispielsweise in einem Badezimmer eingesetzt, können als Funktionselemente beispielsweise Rasierer-, Zahnbürsten- oder Mundspülsystemladestationen eingesetzt werden. Wird das Einbaumöbel zu einem anderen Zeitpunkt in einem Wohnzimmer abgestellt, können die zuvor genannten Funktionselemente einfach aus dem Einbaurahmen herausgenommen und beispielsweise durch ein Lichtelement oder einen Adapter zum Anschluss eines Abspielgerätes für akustische Signale verwendet werden. Wird das Leichtbaumöbel in der Küche eingesetzt, kann beispielsweise eine Ladestation für ein Handrührgerät in den Einbaurahmen eingesetzt werden.

Ein weiterer erheblicher Vorteil dieser Anordnung ist, dass die Stromversorgung des Einbaurahmens über ein an die Trägerelemente angeschlossenes Kabel erfolgt, so dass beim Übergang von der Leichtbauplatte zur Leichtbauplatte tragenden Trägerplatte keine Gefahren durch unsachgemäße Zugbelastungen oder Quetschungen von separat zu verbindenden Kabeln zu befürchten ist.

Vorteilhafte Ausgestaltungen der Erfindung sind Gegenstand der Unteransprüche.

Gemäß einer vorteilhaften Ausführungsvariante sind die Funktionselemente in dem Einbaurahmen einrastbar einsetzbar und ermöglichen so einen einfachen Austausch der Funktionselemente.

Gemäß einer weiteren Ausgestaltung der erfindungsgemäßen Anordnung weist zumindest einer der Verbindungsbeschläge der mindestens einen Leichtbauplatte eine Aufnahme für das Trägerelement auf, in der in dem von der Oberfläche der Leichtbauplatte abgewandten Ende des Verbindungsbeschlages das Trägerelement fixierbar ist. An diesem Ende ist ein stromleitendes Kabel angeordnet, das mit dem Trägerelement elektrisch gekoppelt ist, wobei das andere Ende des stromleitenden Kabels mit den Kontaktelementen des Einbaurahmens direkt oder indirekt verbunden ist. Die Integration der Stromweiterleitung von den Trägerelementen über die Verbindungsbeschläge ermöglicht eine einfache und zuverlässige Weiterleitung eines Versorgungstroms bzw. einer Versorgungsspannung an das jeweilige Funktionselement.

Unter Leichtbauplatten sind Platten mit zwei äußeren Deckschichten sowie einer Mittelschicht, die im Sinne der Leichtbauweise eine geringere Materialdichte als die beiden Deckschichten aufweist, zu verstehen. Dabei kann diese Mittelschicht beispielsweise als Wabenplatte oder Schaumkernplatte ausgebildet sein.

Nachfolgend werden Ausführungsbeispiele der Erfindung anhand der beiliegenden Zeichnungen näher erläutert. Es zeigen:
- Figuren 1 und 2: unterschiedliche perspektivische Ansichten einer Ausführungsvariante eines erfindungsgemäßen Leichtbaumöbels,
- Figuren 3 und 4: unterschiedliche perspektivische Ansichten einer mit Funktionselementen bestückten Leichtbauplatte und
- Figuren 5 bis 12: perspektivische Ansichten verschiedenster in einen Einbaurahmen einsetzbare Funktionselemente.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Leichtbaumöbels und anderer Teile. Diese Begriffe sind nicht einschränkend zu verstehen, das heißt, durch verschiedene Arbeitsstellungen oder die spiegelsymmetrische Auslegung oder dergleichen können sich diese Bezüge ändern.

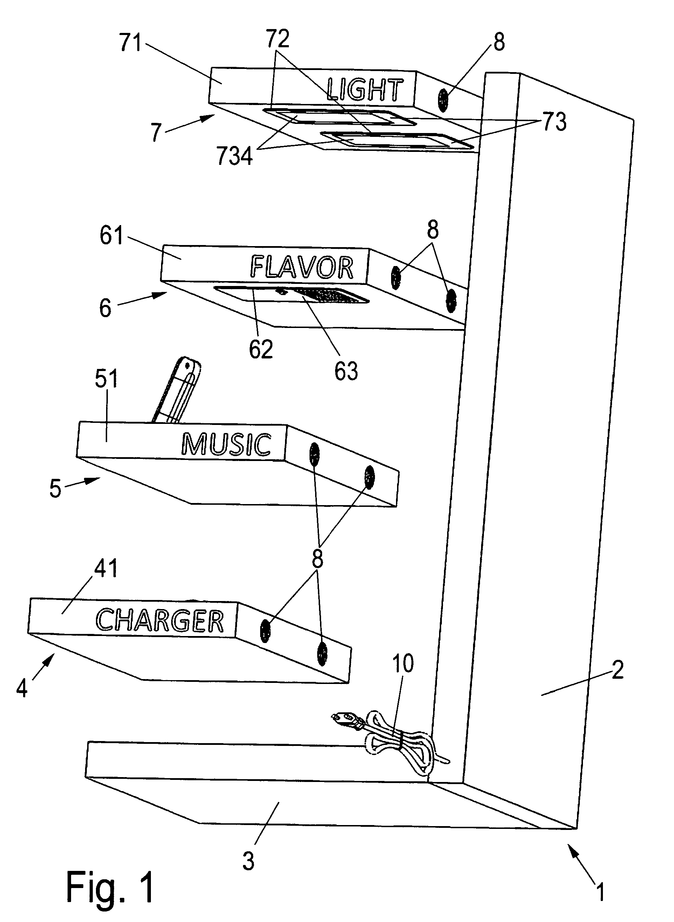

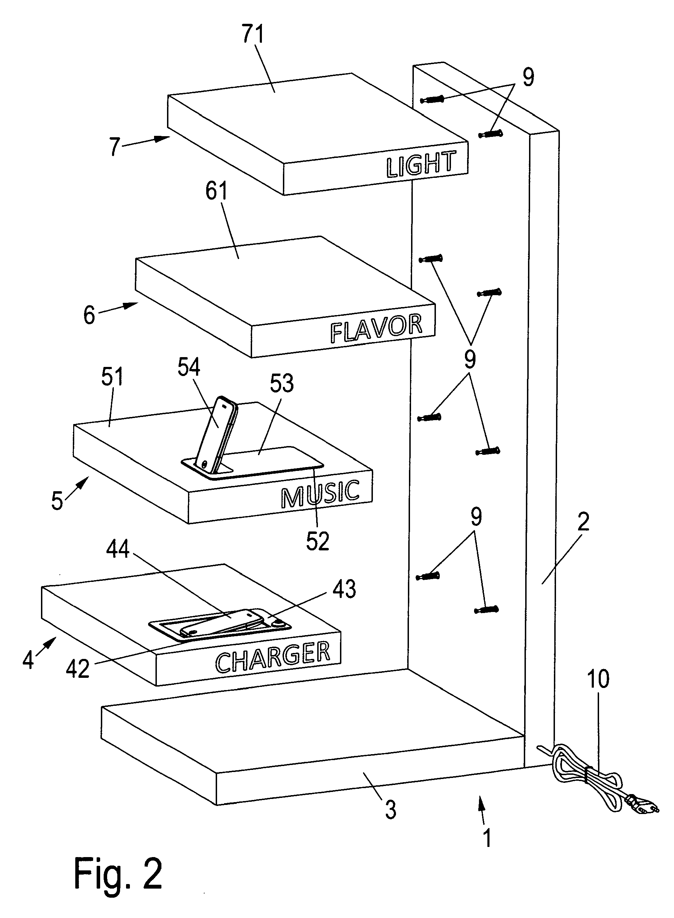

In den Figuren 1 und 2 ist mit dem Bezugszeichen 1 insgesamt ein Leichtbaumöbel 1 bezeichnet. Das Leichtbaumöbel besteht aus mehreren Leichtbauplatten, die über Verbindungsbeschläge 8 und Trägerelemente 9 zusammengefügt sind. Das hier gezeigte Leichtbaumöbel 1 weist eine bevorzugt senkrecht stehende Trägerplatte 2 auf. Am unteren bodennahen Ende der Trägerplatte 2 ist eine Leichtbauplatte 3 derart befestigt, dass die Leichtbauplatte 3 zusammen mit der Trägerplatte 2 zusammen ein L-förmiges Gestell ausbilden, welches in dieser Form ohne weiteres in einem Raum aufgestellt werden kann. Selbstverständlich ist es denkbar, an der Unterseite der als Bodenplatte verwendeten Leichtbauplatte 3 Fußteile oder Rollen anzubringen.

Aus der Trägerplatte 2 ragt des Weiteren ein elektrisches Kabel 10 mit einem Netzteil (nicht gezeigt) und einem endseitig angebrachten Stecker heraus, welches innerhalb der Trägerplatte mit Aufnahmeelementen zur Aufnahme von Trägerelementen 9 verbunden ist. Die Aufnahmeelemente sind dabei insbesondere als Klebedübel mit an diesen angeordneten Kontaktelementen ausgebildet, wobei die Kontaktelemente (nicht gezeigt) so gestaltet sind, dass sie einerseits eine Kabelaufnahme zur elektrischen Verbindung mit dem Kabel 10 aufweisen und andererseits so mit dem Dübel verbunden sind, dass das Trägerelement 9 beim Einbringen in den Klebedübel elektrisch an das Kontaktelement am Klebedübel angeschlossen ist.

An der Trägerplatte 2 sind ferner weitere Leichtbauplatten 4, 5, 6, 7 befestigt, wobei die Befestigung über die Trägerelemente 9 und in den Leichtbauplatten 4, 5, 6, 7 eingelassenen Verbindungsbeschlägen 8 vorgenommen ist.

Die Leichtbauplatten 4, 5, 6, 7 zeichnen sich des weiteren dadurch aus, dass in jede der Leichtbauplatten 4, 5, 6, 7 jeweils ein Einbaurahmen 42, 52, 62, 72 eingelassen ist, wobei der Einbaurahmen 42, 52, 62, 72 an einem Innenrand 421, 521, 621, 721 Kontaktelemente 424, 524, 624, 724 aufweist, die elektrisch mit den Trägerelementen 9 verbunden sind. Bevorzugt erstreckt sich von dem Innenrand 421, 521, 621, 721 her über den Rand der Aussparung in der Leichtbauplatte 4, 5, 6, 7 eine Umrandung 422, 522, 622, 722 zur Überdeckung der Aussparung in der Leichtbauplatte 4, 5, 6, 7.

Die Einbaurahmen 42, 52, 62, 72 sind dabei so ausgebildet, dass sie stets von gleicher Größe und identischer Bauweise sind. Die Einbaurahmen 42, 52, 62, 72 dienen damit als universell einsetzbare Einbaurahmen, in die jeweils mit räumlichen entsprechend angeordneten Kontaktelementen 435, 535, 635, 735 bestückte Funktionselemente mit in die Einbaurahmen 42, 52, 62, 72 passenden Gehäusen 431, 531, 631, 731 austauschbar einsetzbar sind, so dass je nach Standort des Leichtbaumöbels 1 entsprechende Funktionselemente in die Einbaurahmen eingesetzt werden können.

Wenn ein solches Leichtbaumöbel 1 beispielsweise in einem Badezimmer abgestellt wird, können als Funktionselemente hier Aufladeeinrichtungen 434, 436 für einen Rasierer 44, eine Zahnbürste oder ein Mundspülsystem eingesetzt werden. Soll das Leichtbaumöbel in einem Wohnzimmer Verwendung finden, kann beispielsweise ein als Adapter zum Anschluss eines Abspielgerätes für akustische Signale oder ein als Duftspendereinrichtung oder als Leuchtelement ausgebildetes Funktionselement in den Einbaurahmen eingesetzt werden.

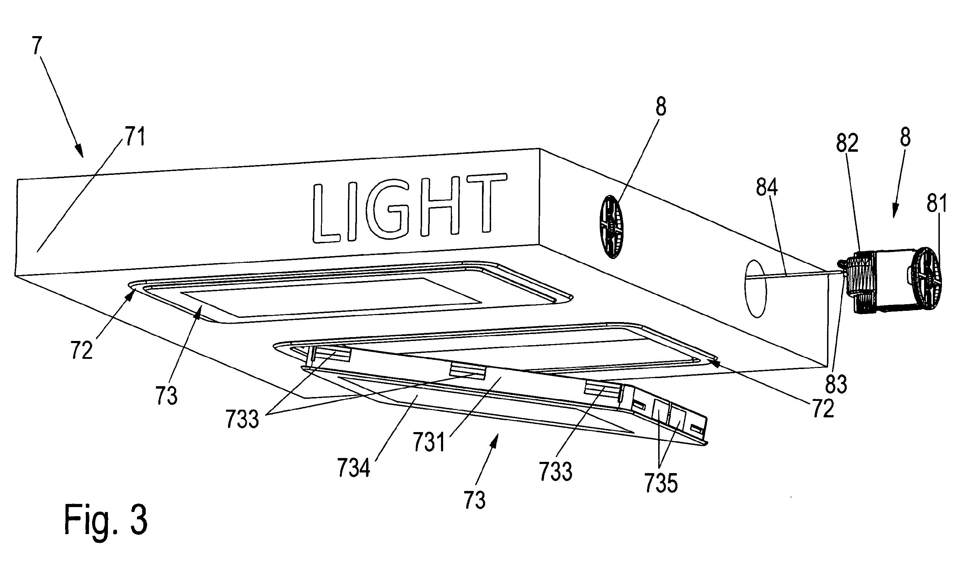

Die Figuren 3 bis 4 zeigen eine solche Leichtbauplatte 7 mit Einbaurahmen 72 und darin eingesetztem als Leuchtmodul ausgebildetem Funktionselement 73 mit zwei Leuchtelementen. Zu erkennen ist in diesen Figuren der jeweilige Einbaurahmen 72, der in einer Oberseite oder Unterseite der Leichtbauplatte versenkt eingesetzt ist. Jeder dieser Einbaurahmen 42, 52, 62, 72 besteht aus einem Gehäuse 721 mit einem Gehäuseboden und einem den Gehäuseboden umlaufenden Rand, wobei an dem Rand Fixiereinrichtungen 423, 523, 623, 723 vorgesehen sind, mit denen der Einbaurahmen 42, 52, 62, 72 in der Leichtbauplatte 4, 5, 6, 7 fixiert ist.

Des Weiteren sind an einer vorbestimmten Stelle an der Innenseite des Randes Kontaktelemente 424, 524, 624, 724 vorgesehen, die über ein Kabel 425, 525, 625, 725 direkt oder indirekt mit dem Trägerelement 9 elektrisch verbunden sind. Die Stromanbindung erfolgt dabei bevorzugt dergestalt, dass an dem Kabel 425, 525, 625, 725 ein Steckelement 426, 526, 626, 726 angeordnet ist, das in ein dazu passendes Steckelement 85 an einem Kabelende 84 angesteckt werden kann, wobei das Kabelende 84 an seinem von dem Kabel 425, 525, 625, 725 beabstandeten Ende an dem Verbindungsbeschlag 8 festgelegt ist.

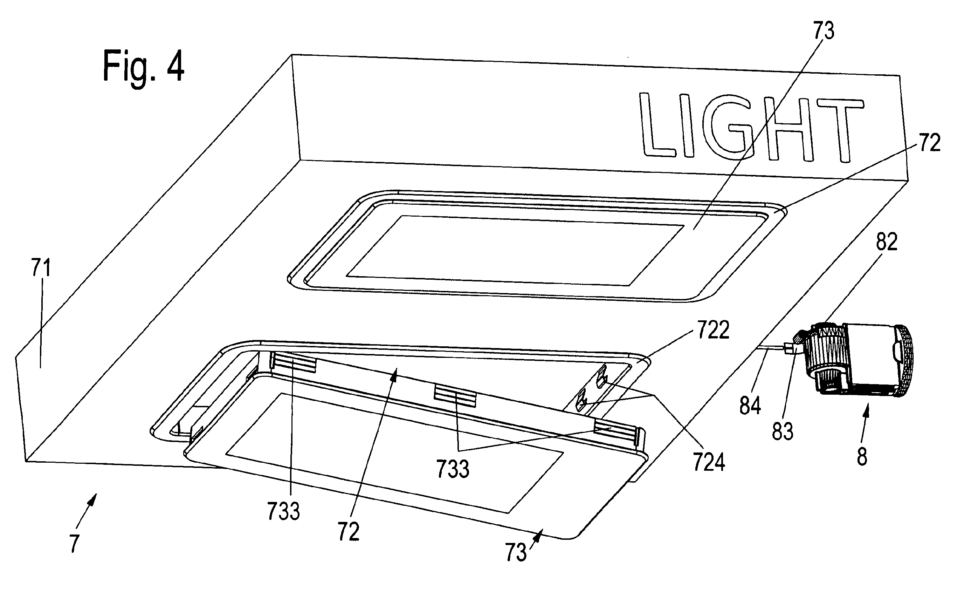

Wie insbesondere in den Figuren 3 und 4 zu erkennen ist, weist zumindest einer der Verbindungsbeschläge 8 der mindestens einen Leichtbauplatte 4, 5, 6, 7 eine Aufnahme 81 für das Trägerelement 9 auf, in dem von der Oberfläche 41, 51, 61, 71 der Leichtbauplatte 4, 5, 6, 7 abgewandtem Ende 82 des Verbindungsbeschlages 8 das Trägerelement 9 fixierbar ist. Dabei ist an dem abgewandtem Ende 82 des Verbindungsbeschlages 8 ein stromleitendes Kabel 84 angeordnet, das direkt oder indirekt mit dem Trägerelement elektrisch verbunden ist.

Insbesondere ist an dem Ende 82 des Verbindungsbeschlages 8 ein Kontaktblech 83 mit einer ein stromleitendes Kabel 84 aufnehmenden Kabelaufnahme angeordnet, wobei das Kabel 84 dann bevorzugt über die Steckverbindung 85, 426, 526, 626, 726 an das Kabel 425, 525, 625, 725 anschließbar ist und so die Kontaktelemente 424, 524, 624, 724 mit Strom versorgt.

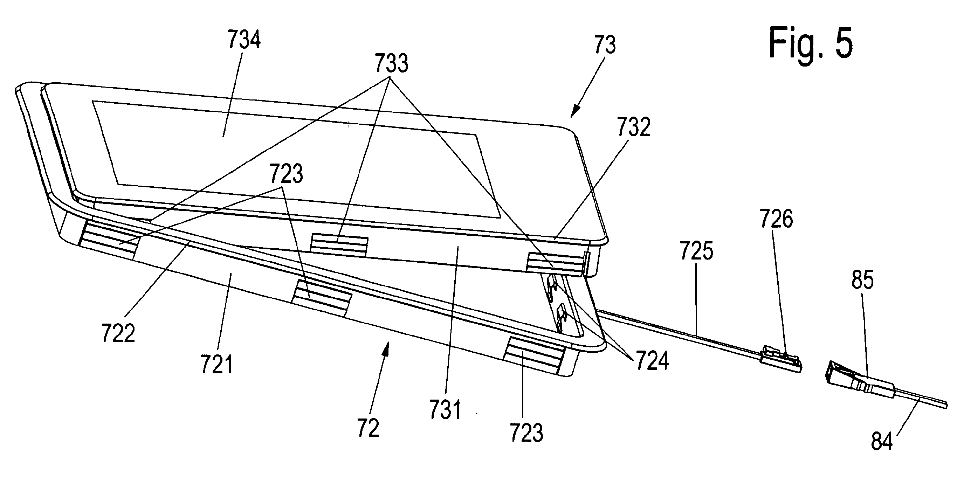

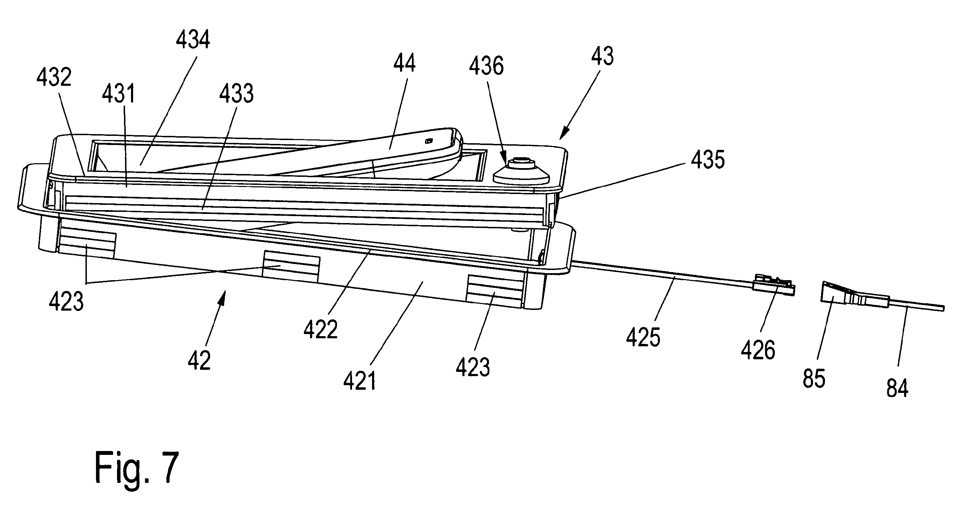

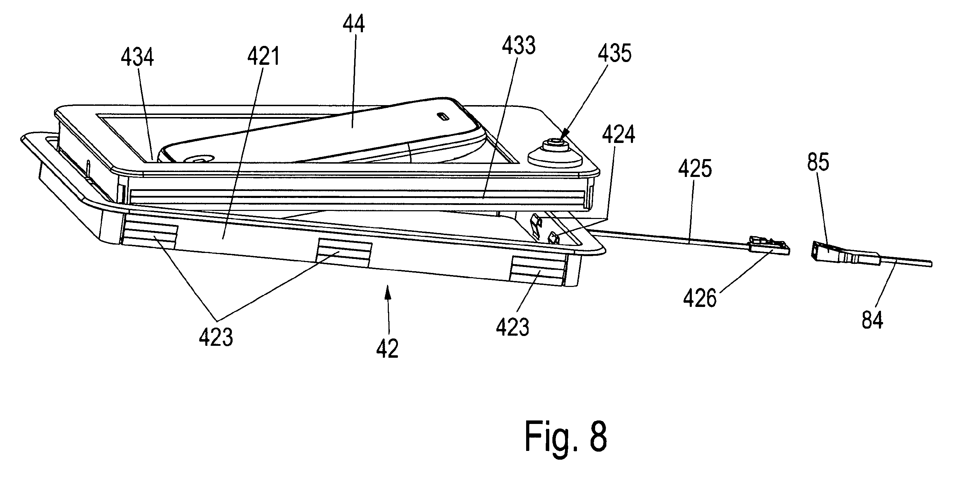

Die Figuren 5 bis 12 zeigen jeweils verschiedene in den Einbaurahmen 42, 52, 62, 72 eingesetzte Funktionselemente 43, 53, 63, 73. Diese Funktionselemente 43, 53, 63, 73 weisen jeweils ein den Einbaurahmen 42, 52, 62, 72 angepasstes Gehäuse 431, 531, 631, 731 mit einem Deckel 432, 532, 632, 732 auf, an dessen äußerer Umrandung Kontaktelemente 435, 535, 635, 735 so angeordnet sind, dass sie im eingesetzten Zustand des Funktionselementes 43, 53, 63, 73 die Kontaktelemente 424, 524, 624, 724 des Einbaurahmens 42, 52, 62, 72 kontaktieren. Desweiteren sind an der äußerer Umrandung der Gehäuse 431, 531, 631, 731 Fixiereinrichtungen 433, 533, 633, 733 vorgesehen sind, mit denen die Funktionselemente 43, 53, 63, 73 in den Einbaurahmen 42, 52, 62, 72 fixiert sind.

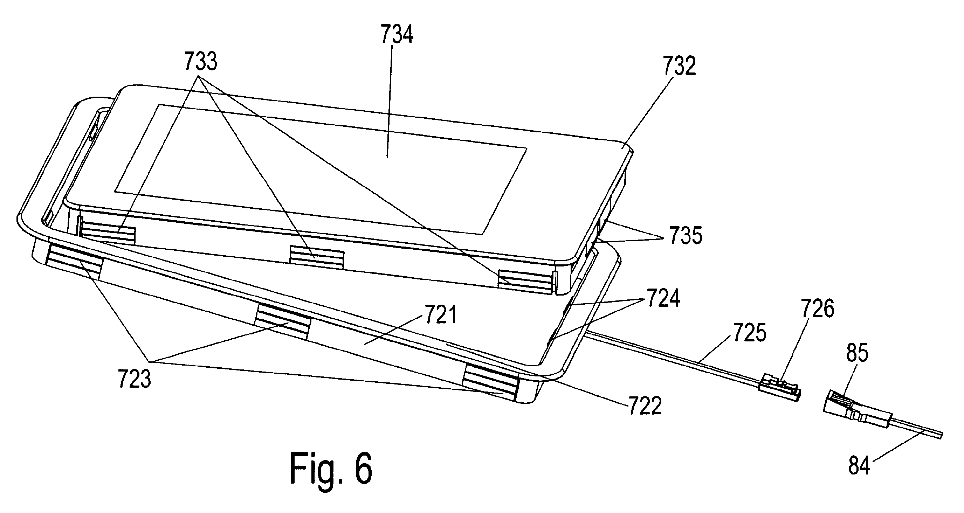

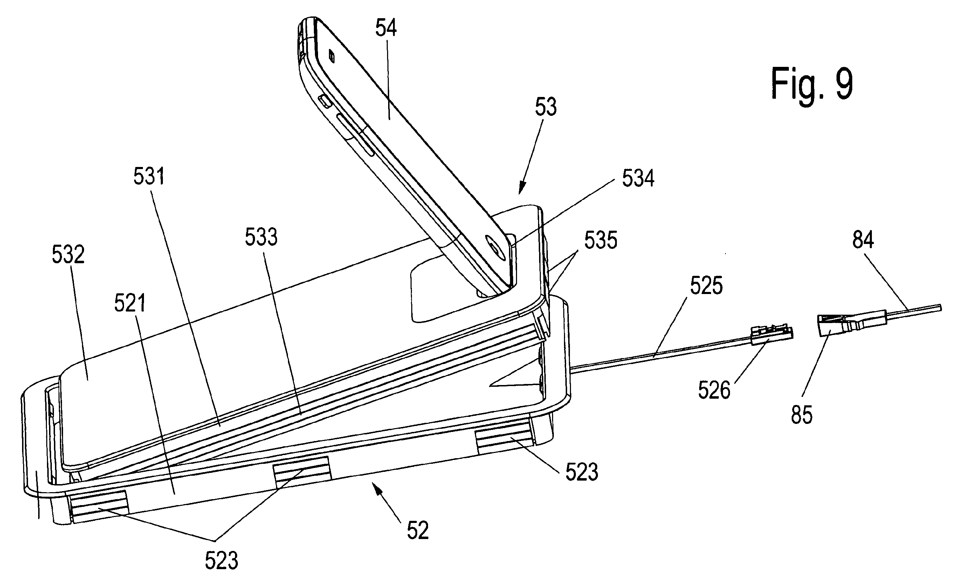

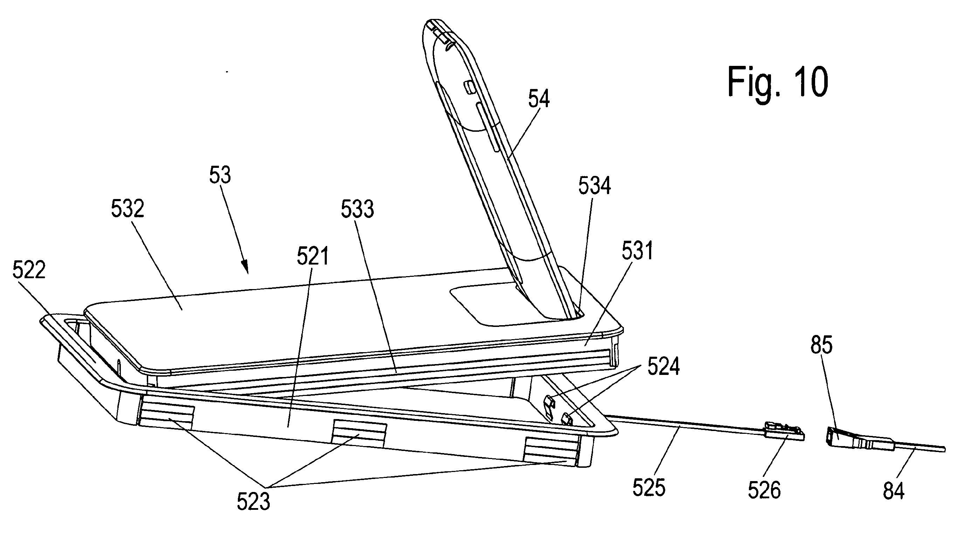

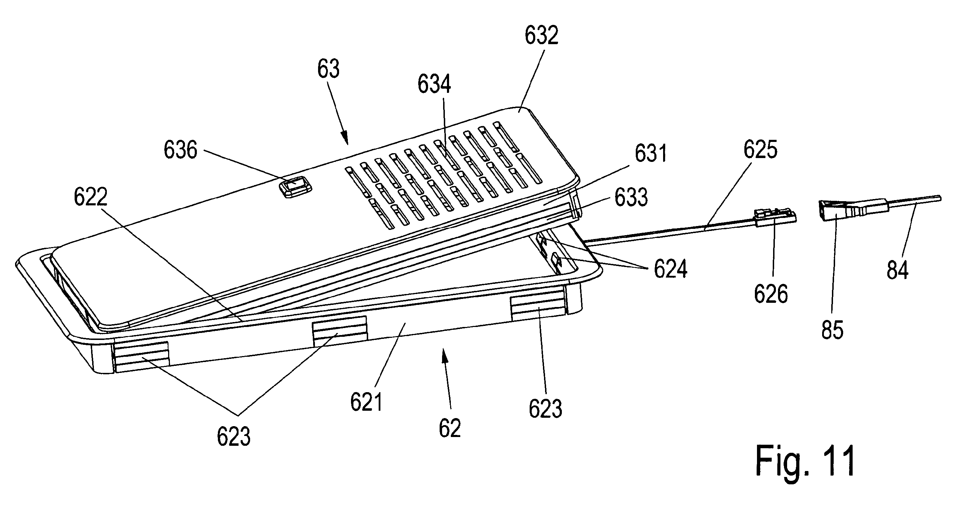

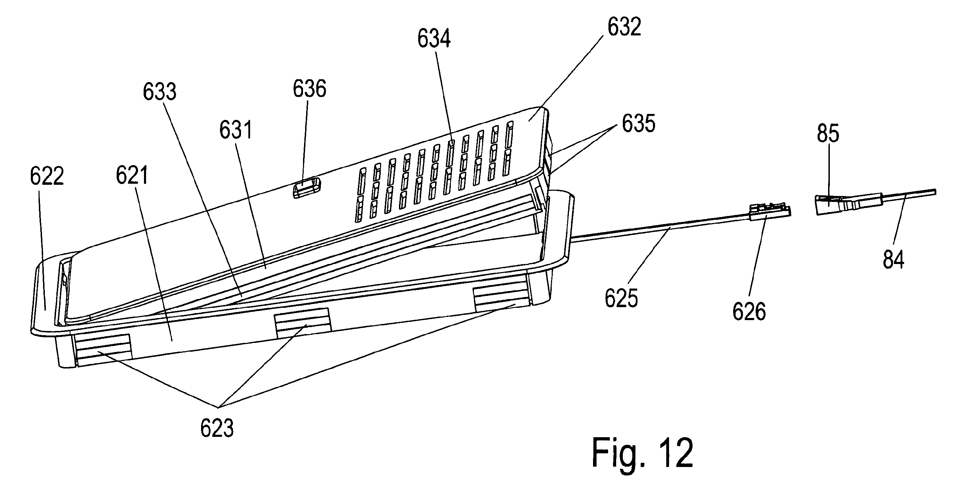

Je nach Ausgestaltung des Funktionselementes 43, 53, 63, 73 ist in dem Gehäuse 431, 531, 631, 731 beispielsweise eine Aufladeeinrichtung 434, 436 für ein elektrisches Gerät wie beispielsweise einen Rasierer 44, eine elektrische Zahnbürste, ein Küchengerät, ein Telefon oder dergleichen eingebaut oder wie in den Figuren 5 und 6 gezeigt eines oder mehrere Leuchtelemente 734 oder wie in den Figuren 9 und 10 gezeigt eine Duftspendereinrichtung 634 die über einen Schalter 636 an- und ausgeschaltet werden kann oder auch, wie in den Figuren 11 und 12 gezeigt, ein Adapter 534 zum Anschluss eines Abspielgerätes 54 für akustische Signale eingebaut.

Wichtig ist, dass der Einbaurahmen 42, 52, 62, 72 und die darin einsetzbaren Funktionselemente 43, 53, 63, 73 so gestaltet sind, dass sie von einheitlicher Größe sind und so in einfacher Weise austauschbar in dem Einbaurahmen festgelegt werden können. Die Festlegung erfolgt dabei bevorzugt durch eine Einrastung der Funktionselemente 43, 53, 63, 73 in dem Einbaurahmen 42, 52, 62,72.

Wichtig ist außerdem, dass die Stromversorgung des Einbaurahmens über die Trägerelemente 9 erfolgt, mit dem die jeweilige Leichtbauplatte mit den integrierten Einbaurahmen an der Trägerplatte 2 eines solchen Leichtbaumöbels festgelegt sind und so eine einfach zu integrierende Stromversorgung solcher Funktionselemente gewährleistet ist.

### Bezugszeichenliste

- 1: Leichtbaumöbel
- 2: Trägerplatte
- 3: Leichtbauplatte / Bodenplatte
- 4: Leichtbauplatte
- 5: Leichtbauplatte
- 6: Leichtbauplatte
- 7: Leichtbauplatte
- 8: Verbindungsbeschlag
- 9: Trägerelement
- 10: Kabel
- 41: Oberfläche
- 42: Einbaurahmen
- 43: Funktionselement
- 44: Rasierer
- 51: Oberfläche
- 52: Einbaurahmen
- 53: Funktionselement
- 54: Abspielgerät
- 61: Oberfläche
- 62: Einbaurahmen
- 63: Funktionselement
- 71: Oberfläche
- 72: Einbaurahmen
- 73: Funktionselement
- 81: Aufnahme
- 82: Ende
- 83: Kontaktblech
- 84: Kabelende
- 85: Steckelement
- 421: Innenrand
- 422: Umrandung
- 423: Fixiereinrichtung
- 424: Kontaktelement
- 425: Kabel
- 426: Steckelement
- 431: Gehäuse
- 432: Deckel
- 433: Fixiereinrichtung
- 434: Aufladeeinrichtung
- 435: Kontaktelement
- 436: Aufladeeinrichtung
- 521: Innenrand
- 522: Umrandung
- 523: Fixiereinrichtung
- 524: Kontaktelement
- 525: Kabel
- 526: Steckelement
- 531: Gehäuse
- 532: Deckel
- 533: Fixiereinrichtung
- 534: Adapter
- 535: Kontaktelement
- 621: Innenrand
- 622: Umrandung
- 623: Fixiereinrichtung
- 624: Kontaktelement
- 625: Kabel
- 626: Steckelement
- 631: Gehäuse
- 632: Deckel
- 633: Fixiereinrichtung
- 634: Duftspendereinrichtung
- 635: Kontaktelement
- 636: Schalter
- 721: Innenrand
- 722: Umrandung
- 723: Fixiereinrichtung
- 724: Kontaktelement
- 725: Kabel
- 726: Steckelement
- 731: Gehäuse
- 732: Deckel
- 733: Fixiereinrichtung
- 734: Leuchtelement
- 735: Kontaktelement

## Patentansprüche

1. Anordnung mindestens einer Leichtbauplatte (4, 5, 6, 7) an einer mit einer Stromversorgung ausgestatteten Trägerplatte (2), an der Trägerelemente (9) zur Halterung der mindestens einen Leichtbauplatte (4, 5, 6, 7) vorgesehen sind, die in Verbindungsbeschlägen (8) verankerbar sind, welche in die Leichtbauplatte (4, 5, 6, 7) eingelassen sind, **dadurch gekennzeichnet, dass** die Leichtbauplatte (4, 5, 6, 7) einen Einbaurahmen (42, 52, 62, 72) mit darin angeordneten Kontaktelementen (424, 524, 624, 724) aufweist, wobei in dem Einbaurahmen (42, 52, 62, 72) ein mit räumlich entsprechend angeordneten Kontaktelementen (435, 535, 635, 735) bestücktes Funktionsetement (43, 53, 63, 73) mit in den Einbaurahmen (42, 52, 62, 72) passendem Gehäuse (431, 531, 631, 731) austauschbar einsetzbar ist, wobei die Stromversorgung der Kontaktelemente (424, 524, 624, 724) des Einbaurahmens (42, 52, 62, 72) über die Trägerelemente (9) erfolgt.

2. Anordnung nach Anspruch 1, **dadurch gekennzeichnet, dass** das Funktionselement (43, 53, 63, 73) einrastbar in dem Einbaurahmen (42, 52, 62, 72) einsetzbar ist.

3. Anordnung nach Anspruch 1 oder 2, **dadurch gekennzeichnet, dass** zumindest einer der Verbindungsbeschläge (8) der mindestens einen Leichtbauplatte (4, 5, 6, 7) eine Aufnahme für das Trägerelement (9) aufweist, in deren von der Oberfläche (41, 51, 61, 71) der Leichtbauplatte (4, 5, 6, 7) abgewandtem Ende (82) des Verbindungsbeschlages (8) das Trägerelement (9) fixierbar ist und an dem ein stromleitendes Kabel (84) angeordnet ist, das direkt oder indirekt mit dem Trägerelement (9) elektrisch verbunden ist, wobei das stromleitende Kabel (84) mit den Kontaktelementen (424, 524, 624, 724) direkt oder indirekt verbunden ist.

4. Anordnung nach Anspruch 3, **dadurch gekennzeichnet, dass** das stromleitende Kabel (84) an ein an die Kontaktelemente (424, 524, 624, 724) angeschlossenes stromleitendes Kabel (425, 525, 625, 725) über eine Steckverbindung (85, 426, 526, 626, 726) angeschlossen ist.

5. Anordnung nach Anspruch 3, **dadurch gekennzeichnet, dass** an dem von der Oberfläche (41, 51, 61, 71) der Leichtbauplatte (4, 5, 6, 7) abgewandtem Ende (82) des Verbindungsbeschlages (8) ein Kontaktblech (83) mit einer das stromleitende Kabel (84) aufnehmenden Kabelaufnahme angeordnet ist.

6. Anordnung nach einem der vorstehenden Ansprüche, **dadurch gekennzeichnet, dass** das Funktionselement (43, 53, 63, 73) mit mindestens einer Aufladeeinrichtung (434, 435), einem Adapter (534) zum Anschluß eines Abspielgerätes (54) für akustische Signale, einer Duftspendereinrichtung (634) oder einem Leuchtelement (734) bestückt ist.

7. Anordnung nach einem der vorstehenden Ansprüche, **dadurch gekennzeichnet, dass** die Trägerplatte (2) als Leichtbauplatte ausgebildet ist, wobei die Trägerelemente (9) an in der Trägerplatte (2) eingelassenen Klebedübeln befestigt sind und über an den Klebedübeln angeordnete Kontaktelemente mit elektrischem Strom versorgbar sind.

## Claims

1. An arrangement of at least one lightweight construction boards (4, 5, 6, 7) on a carrier board (2) which is provided with a power supply and on which carrier elements (9) are provided for fixing the at least one lightweight construction board (4, 5, 6, 7), which carrier elements can be anchored in connection fittings (8) which are embedded in the lightweight construction board (4, 5, 6, 7), **characterized in that** the lightweight construction board (4, 5, 6, 7) comprises a mounting frame (42, 52, 62, 72) with contact elements (424, 524, 624, 724) arranged therein, wherein a functional element (43, 53, 63, 73) equipped with spatially respectively arranged contact elements (435, 535, 635, 735) with a housing (431, 531, 631, 731) that fits into the mounting frame (42, 52, 62, 72) is exchangeably insertable into the mounting frame (42, 52, 62, 72), wherein the power supply of the contact elements (424, 524, 624, 724) of the mounting frame (42, 52, 62, 72) occurs via the carrier elements (9).

2. An arrangement according to claim 1, **characterized in that** the functional element (43, 53, 63, 73) can be inserted in a latchable manner into the mounting frame (42, 52, 62, 72).

3. An arrangement according to claim 1 or 2, **characterized in that** at least one of the connection fittings (8) of the at least one lightweight construction board (4, 5, 6, 7) comprises a receiver for the carrier element (9), in whose end (82) of the connection fitting (8) facing away from the surface (41, 51, 61, 71) of the lightweight construction board (4, 5, 6, 7) the carrier element (9) can be fixed and on which a live cable (84) is arranged, which is connected directly or indirectly to the carrier element (9), wherein the live cable (84) is directly or indirectly connected to the contact elements (424, 524, 624, 724).

4. An arrangement according to claim 3, **characterized in that** the live cable (84) is connected via a plug-and-socket connection (85, 426, 526, 626, 726) to a live cable (425, 525, 625, 725) connected to the contact elements (424, 524, 624, 724).

5. An arrangement according to claim 3, **characterized in that** a contact plate (83) with a cable receiver accommodating the live cable (84) is arranged at the end (82) of the connection fitting (8) facing away from the surface (41, 51, 61, 71) of the lightweight construction board (4, 5, 6, 7).

6. An arrangement according to one of the preceding claims, **characterized in that** the functional element (43, 53, 63, 73) is provided with least one charging device (434, 435), one adapter (534) for connecting a playback device (54) for acoustic signals, a scent dispenser device (634) or a lighting element (734).

7. An arrangement according to one of the preceding claims, **characterized in that** the carrier board (2) is arranged as a lightweight construction board, wherein the carrier elements (9) are fixed to glued dowels embedded in the carrier board (2) and can be supplied with electric power via contact elements arranged on the glued dowels.

## Revendications

1. Agencement au moins d'un panneau de construction légère (4, 5, 6, 7) au niveau d'un panneau de support (2) équipé d'une alimentation de courant, au niveau duquel sont prévus des éléments de support (9) servant à la fixation du panneau de construction légère (4, 5, 6, 7) au moins au nombre de un, lesdits éléments de support pouvant être ancrés dans des ferrures d'assemblage (8) pratiquées dans le panneau de construction légère (4, 5, 6, 7), **caractérisé en ce que** le panneau de construction légère (4, 5, 6, 7) présente un cadre d'encastrement (42, 52, 62, 72) comprenant des éléments de contact (424, 524, 624, 724) logés à l'intérieur de ce dernier, sachant qu'un élément fonctionnel (43, 53, 63, 73) pourvu d'éléments de contact (435, 535, 635, 735) disposés spatialement de manière correspondante peut être inséré de manière interchangeable avec un boîtier (431, 531, 631, 731) adapté au cadre d'encastrement (42, 52, 62, 72) dans le cadre d'encastrement (42, 52, 62, 72), sachant que l'alimentation en courant des éléments de contact (424, 524, 624, 724) du cadre d'encastrement (42, 52, 62, 72) se fait par l'intermédiaire des éléments de support (9).

2. Agencement selon la revendication 1, **caractérisé en ce que** l'élément fonctionnel (43, 53, 63, 73) peut être inséré de manière enclenchable dans le cadre d'encastrement (42, 52, 62, 72).

3. Agencement selon la revendication 1 ou 2, **caractérisé en ce qu'**au moins une des ferrures d'assemblage (8) du panneau de construction légère (4, 5, 6, 7) au moins au nombre de un présente un logement pour l'élément de support (9), dans l'extrémité (82) de laquelle ferrure d'assemblage (8), laquelle extrémité est opposée à la surface (41, 51, 61, 71) du panneau de construction légère (4, 5, 6, 7) peut être fixé l'élément de support (9), et au niveau de laquelle est disposé un câble (84) conducteur de courant, qui est relié de manière électrique directement ou indirectement à l'élément de support (9), sachant que le câble (84) conducteur de courant est relié directement ou indirectement aux éléments de contact (424, 524, 624, 724).

4. Agencement selon la revendication 3, **caractérisé en ce que** le câble (84) conducteur de courant est raccordé à un câble (425, 525, 625, 725) conducteur de courant raccordé aux éléments de contact (424, 524, 624, 724) par l'intermédiaire d'un dispositif d'assemblage par enfichage (85, 426, 526, 626, 726).

5. Agencement selon la revendication 3, **caractérisé en ce qu'**une tôle de contact (83) dotée d'un logement de câble recevant le câble (84) conducteur de courant est disposée au niveau de l'extrémité (82) de la ferrure d'assemblage (8), laquelle extrémité est opposée à la surface (41, 51, 61, 71) du panneau de construction légère (4, 5, 6, 7).

6. Agencement selon l'une quelconque des revendications précédentes, **caractérisé en ce que** l'élément fonctionnel (43, 53, 63, 73) est pourvu d'au moins un dispositif de chargement (434, 435), d'un adaptateur (534) servant au raccordement d'un terminal lecteur (54) pour des signaux acoustiques, d'un dispositif diffuseur de parfum (634) ou d'un élément luminescent (734).

7. Agencement selon l'une quelconque des revendications précédentes, **caractérisé en ce que** le panneau de support (2) est réalisé sous la forme d'un panneau de construction légère, sachant que les éléments de support (9) sont fixés au niveau de goujons collés ménagés dans le panneau de support (2) et peuvent être alimentés en courant électrique par l'intermédiaire d'éléments de contact disposés au niveau des goujons collés.
